# EUROPÄISCHE PATENTSCHRIFT

(11) **EP 3 650 168 B1**
(45) Veröffentlichungstag und Bekanntmachung des Hinweises auf die Patenterteilung: **07.06.2023**
(21) Anmeldenummer: 19207612.3
(22) Anmeldetag: 07.11.2019
(51) Int. Cl.: B23Q 3/06

(54) **AUFSPANNVORRICHTUNG ZUM FIXIEREN VON WERKSTÜCKEN BEI EINER BEARBEITUNG**
CLAMPING DEVICE FOR FIXING WORKPIECES DURING PROCESSING
DISPOSITIF DE FIXATION PERMETTANT DE FIXER DES PIÈCES LORS D'UN USINAGE

(30) Priorität: 07.11.2018 EP 18204968
(43) Veröffentlichungstag der Anmeldung: 13.05.2020
(73) Patentinhaber: On.GmbH, 88525 Heudorf (DE)
(72) Erfinder: Brobeil, Volker, 88525 Dirmentingen (DE)
(74) Vertreter: Baur & Weber Patentanwälte PartG mbB

(56) Entgegenhaltungen:
- DE-A1- 19 504 916
- DE-A1-102013 111 127
- DE-B3-102011 078 875
- DE-C2- 19 504 916

## Beschreibung

Die Erfindung betrifft eine Aufspannvorrichtung zum Fixieren von Werkstücken bei einer Bearbeitung.

Aufspannvorrichtungen wie beispielsweise Aufspannwinkel sind Werkzeuge, die meist auf Werkbänken oder auf Maschinentischen eingesetzt werden, um zu bearbeitende Werkstücke in einer vorgegebenen Position zu fixieren. Üblicherweise wird bei der Bearbeitung eine lotrechte Position des Werkstücks gewünscht, sodass Aufspannvorrichtungen häufig als rechte Winkel mit zwei Schenkeln oder als Würfel ausgeführt werden.

Zur Fixierung von Werkstücken, beispielsweise mittels Spannklemmen, umfassen Aufspannwinkel T-Nuten, an denen ein Werkstück verschraubt werden kann.

Aufspannwinkel als Werkstückhalter insbesondere bei der Bearbeitung mit Bohr- und Fräsmaschinen einzusetzen, ist bereits seit langer Zeit bekannt. So zeigt die DE 643 782 einen Aufspannwinkel für Werkzeugmaschinen mit einer Grundplatte, in derer gewölbter Auflagefläche eine Aufspannplatte drehbar gelagert ist, wobei in der Aufspannplatte eine T-Nut ausgebildet ist, an der Werkstücke zur Bearbeitung fixiert werden können.

Aus der CN 205765746 U ist ein Aufspannwinkel bekannt, der zwei an einer Winkelschiene befestigte Trägerplatten umfasst, wobei in den Trägerplatten Bohrungen vorgesehen sind, an denen ein Werkstück zur Bearbeitung festgeschraubt werden kann.

Die DE 10 2011 078 875 B3 betrifft eine Vorrichtung zum Spannen und Halten von Werkstücken mittels Unterdruck, mit wenigstens einem Spannbalken und wenigstens einem auf eine Auflagefläche des Spannbalkens aufsetzbaren Blocksauger, auf welchem das zu spannende Werkstück auflegbar ist, wobei der Spannbalken mit Absperrventilen versehen ist, über welche Luft absaugbar ist und dadurch der Blocksauger und/oder das Werkstück gespannt wird bzw. werden, und der Blocksauger auf seiner auf der Auflagefläche aufliegenden Unterseite eine wenigstens ein Absperrventil umgrenzende Dichtung aufweist, durch welche ein abgeschlossener Raum gebildet wird, welcher über das Absperrventil evakuierbar ist, wobei die Oberseite des Blocksaugers von einer das Werkstück tragenden Saugplatte gebildet wird, wobei der Spannbalken und/oder der Blocksauger zumindest teilweise aus Beton bestehen.

Die DE 195 04 916 A1 betrifft eine Aufsatz-Spannvorrichtung mit einem gegossenen Vorrichtungsgrundkörper aus einem reaktionsharzgebundenen Material und darin als Einlegeteile angeordnete metallische Elemente für Werkzeugmaschinen und Bearbeitungszentren zur Bearbeitung von schwer spannbaren Werkstücken. In einem turmartigen Vorrichtungsgrundkörper sind gegenüberliegend, durch ein inneres Gerüst verbunden, feste und/oder verstellbare metallische Aufnahmeelemente in mehreren Ebenen waagerecht oder senkrecht angeordnet.

Aus der DE 20 2013 008 519 U1 ist ein Spannsystem zum Spannen von Bauteilen auf Werkzeugmaschinen bekannt, bei dem an einem Auflageelement zwei gegenüberliegend angeordnete T-Nuten vorgesehen sind, an denen einerseits das Spannsystem selbst aber auch ein Werkstück zu Bearbeitung befestigt werden kann.

Aus der DE 1 759 268 U ist eine starrer Aufspannwinkel bekannt, der auf einer Seitenfläche T-Nuten umfasst, an denen ein Werkstück zur lotrechten Ausrichtung während der Bearbeitung befestigt werden kann.

Aus der US 4,828,240 ist eine würfelförmige Haltevorrichtung für Werkstücke während der Bearbeitung bekannt, auf deren Außenflächen Lochplatten anordenbar sind, an denen Werkstücke zur Bearbeitung befestigt werden können. Alternativ können die Lochplatten T-Nuten umfassen, an denen die Werkstücke zur Bearbeitung befestigt werden können.

Aus der DE 10 2013 111 127 A1, die die Basis für den Oberbegriff des Anspruchs 1 bildet, ist eine Aufspannplatte bekannt, die aus einem selbstverdichtenden Beton gebildet ist, in den als Schienen oder als Bolzen ausgebildete Spanneinrichtungen bezüglich der Oberfläche der Aufspannplatte nach innen versetzt angeordnet sind, wobei Bauteile während der Bearbeitung an den Spanneinrichtungen fixiert werden können.

Die aus dem Stand der Technik bekannten Aufspannvorrichtungen sind hinsichtlich ihrer Befestigungsmöglichkeiten häufig eingeschränkt, sodass unterschiedlich ausgebildete Befestigungsmöglichkeiten nur mit größeren konstruktiven Änderungen möglich sind.

Es ist daher Aufgabe der Erfindung, eine verbesserte Aufspannvorrichtung anzugeben.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird eine Aufspannvorrichtung zum Fixieren von Werkstücken bei einer Bearbeitung, umfassend eine Profilschiene und einen Grundkörper aus Beton, wobei die Profilschiene in einer Vertiefung des Grundkörpers angeordnet ist, und die Vertiefung entlang einer Längsrichtung zwischen gegenüberliegenden Stirnseiten einer Außenfläche des Grundkörpers ausgebildet ist, wobei die Profilschiene eine erste Seitenwand und eine zweite Seitenwand umfasst und die Seitenwände innerhalb der Vertiefung einander gegenüberliegend und mit Seitenflächen der Vertiefung in Kontakt stehend angeordnet sind, derart, dass zwischen einander gegenüberliegenden Vorsprüngen der Seitenwände ein Freiraum ausgebildet wird, der mit einander gegenüberliegenden Aufnahmeräumen der Seitenwände zusammenwirkt, um eine T-Nut zwischen den Seitenwänden in der Vertiefung auszubilden. Die erste Seitenwand und die zweite Seitenwand sind separate Baugruppen.

Gegenüber den bekannten Aufspannvorrichtungen ist die Profilschiene somit zweiteilig ausgebildet, was eine größere Flexibilität bei der Anordnung der Seitenwände in der Vertiefung ermöglicht. Die Seitenwände der Profilschiene sind, ohne miteinander in Kontakt zu stehen, an den Seitenflächen einer Vertiefung im Grundkörper angeordnet. Durch die getrennte Ausführung der Seitenwände können diese kostengünstig in einem Strangpressverfahren hergestellt werden und einfach in die Vertiefung eingesetzt werden. Auch können fertigungsbedingte Ungenauigkeiten der Vertiefung durch die getrennte Ausführung der Seitenwände ausgeglichen werden. Demnach kann der Grundkörper aus Beton mit einer etwas größeren Maßtoleranz gefertigt werden, weil die Teile der Aufspannvorrichtung, bei denen ein genaues Endmaß von Bedeutung ist, als separate Bauteile bereitgestellt werden. Ein weiterer Vorteil in der Verwendung zweier getrennter Seitenwände liegt darin, dass ein vom Abstand der Seitenflächen der Vertiefung vorgegebenen Abstand quer zur Längsrichtung einfach eingehalten werden kann, sodass dieselben Seitenwände für unterschiedlich geformte Vertiefungen verwendet werden können.

Die Seitenwände können in der Vertiefung verklebt, einbetoniert oder eingeschraubt werden. Beim Einbetonieren können die Seitenwände Kerben aufweisen, die in den Beton des Grundkörpers eingreifen, sodass die Seitenwände fester gegen Herausziehen aus dem Grundkörper gesichert sind.

Die Seitenwände weisen entlang ihrer Längsachse, die zur Längsrichtung der Vertiefung parallel verläuft, den durchgehend gleichen Querschnitt auf, wobei ein Vorsprung von der Seitenwand heraussteht und ein Aufnahmeraum in die Seitenwand hineinragt. Die Vorsprünge und Aufnahmeräume zweier gegenüber zu einander angeordneter Seitenwände bilden eine T-Nut, in die beispielsweise Schrauben mit ihren Schraubenköpfen zur Fixierung von Werkstücken bei einer Bearbeitung eingebracht werden können.

Die Seitenwände der Profilschiene können über eine Außenfläche des Grundkörpers, in der die Vertiefung gebildet ist, hinausragen. Vorteilhaft ist es in diesem Fall, wenn mehrere Profilschienen eine gemeinsame Ebene über der Außenfläche bilden, sodass Werkstücke flächig an der Aufspannvorrichtung angelegt werden können.

Mittels einer Befestigungsvorrichtung, die eine Standfläche des Grundkörpers bildet, kann die Aufspannvorrichtung auf einem Maschinentisch, einer Werkbank oder allgemein formuliert in einem Bearbeitungsbereich einer Maschine verrutschsicher angeordnet werden. Diese Anordnung erfolgt üblicherweise durch Verschrauben oder durch Sichern mittels Spanneisen.

Der Grundköper aus Beton umfasst auf mindestens einer seiner Seitenflächen Vertiefungen, die rillenartig über die Seitenfläche verlaufen. Die Vertiefungen müssen dabei nicht über die gesamte Seitenfläche laufen, jedoch zur Bildung einer zur Stirnseite hin offenen T-Nut mindestens an einer Stirnseite einer Seitenfläche angrenzen. Vorteilhafterweise werden mehrere voneinander beanstandete Vertiefungen auf einer Seitenfläche geschaffen, sodass ein Werkstück beliebig fixiert werden kann. In der Vertiefung umgeben zwei Seitenflächen und ein Boden einen Raum.

Die Vorsprünge der Seitenwände der Profilschiene verlaufen zueinander parallel in Längsrichtung, wobei die Vorsprünge typischer Weise symmetrisch über den Aufnahmeraum ragen. Alternativ könnte aber auch ein Vorsprung einer der beiden Seitenwände weiter oder weniger weit über den Aufnahmeraum ragen als der andere, sodass im Grenzfall, wenn ein Vorsprung auf Höhe der Seitenwand endet, von einer L-Nut gesprochen werden könnte.

Zum Fixieren eines Werkstücks an der Aufspannvorrichtung wird ein T-förmiges Haltemittel in die T-Nut von der Stirnseite einer Seitenfläche her eingebracht und von der Werkstückseite der T-Nut ausgehend in der T-Nut verspannt. Beim Fixieren eines Werkstückes stützt sich das Haltemittel vom Aufnahmeraum her gegen die Vorsprünge.

Idealerweise stehen die Seitenwände, mittels der die T-Nut gebildet wird, etwas über die Seitenfläche des Grundkörpers über, sodass im Falle mehrerer T-Nuten eine durch die Haltevorrichtungen gebildete, aus der Seitenfläche herausragende Ebene entsteht. Ebenfalls ist es möglich fertigungsbedingte Variationen in den Vertiefungen, die zu einem unterschiedlichen Herausstehen der Haltevorrichtung aus den Seitenflächen führen würden, durch eine gemeinsame Materialabtragung an allen Haltevorrichtungen bis zu einem gewünschten Maß zu erreichen, wobei insbesondere eine gemeinsame Anlagefläche für Werkstücke geschaffen werden kann.

Alternativ ist es aber auch möglich, die zur Werkstücksseite weisende Fläche der T-Nuten, also die Oberseite der Haltevorrichtungen beziehungsweise der Vorsprünge, geringfügig in den Beton versetzt auszuführen. In diesem Fall würde die Außenfläche des Grundkörpers als Anlagefläche für ein zu bearbeitendes Werkstück dienen.

Der Beton des Grundkörpers kann armiert sein und/ oder aus einem selbstverdichtenden hochfesten Beton hergestellt sein.

Gemäß einer Ausführungsform der Erfindung umfasst die Profilschiene eine Stufe, die entlang der Längsrichtung verlaufend aus einem Boden der Vertiefung herausstehend ausgebildet ist, wobei die Seitenwände die zwischen den Seitenflächen, dem Boden und der Stufe gebildeten Räume ausfüllen.

Die zwei separaten Seitenwände werden demnach in einem entlang der Längsrichtung schlitzartig verlaufenden Raum zwischen der Stufe, der Seitenfläche und dem Boden eingebracht, wobei die Seitenwände diesen Raum mit ihrem Unteren Ende auffüllen, sodass der Raum vollständig und kraft- beziehungsweise materialschlüssig ausgefüllt ist. Das untere Ende der Seitenwände ist dabei der Bereich, der im Einbauzustand der Seitenwände tiefer in die Vertiefung hineinragt, als das obere Ende, an dem die Vorsprünge angeordnet sind. Die Bauteilrichtung der Seitenwände zwischen dem unteren Ende und dem oberen Ende wird im Weiteren als Hochachse bezeichnet, gleichzeitig wird die Achse, die in Richtung der gegenüberliegend angeordneten Seitenwand weist, als Querachse bezeichnet. Die Längsachse der Seitenwände verläuft parallel zur Längsachse der Vertiefung, also von Stirnseite zu Stirnseite. Die Aufnahmeräume sind bezüglich der Hochachse so angeordnet, dass diese über die Stufe hinausragen, oder mit der Stufe eine gemeinsame Ebene bilden.

Die Anordnung einer Stufe vergrößert die Berührfläche zwischen dem Grundkörper und den Seitenwänden, sodass eine stabilere Befestigung möglich ist. Die Seitenwände können beim Vorhandensein einer Stufe verklebt oder verschraubt werden.

Der Grundkörper aus Beton wird üblicherweise in einer Schalung hergestellt, dessen mit dem Beton in Kontakt stehende Ecken Schalschrägen aufweisen können, sodass die Seitenwände diese Schalschrägen ebenfalls verfügen können, um eine flächige Verbindung zu erreichen.

Gemäß einer Ausführungsform der Erfindung umfasst die Profilschiene einen Steg, der die beiden gegenüberliegenden Seitenwände verbinden, wobei die Seitenwände und der Steg separate Baugruppen bilden, die miteinander verbindbar sind.

Demnach werden die beiden Seitenwände mittels eines Steges verbunden, wobei der Steg so angeordnet ist, dass dieser entweder auf der Stufe oder dem Boden zu liegen kommt um die Verbindungsfläche zwischen der Profilschiene und dem Grundkörper zu vergrößern. Die Seitenwände und der Steg werden als separate Bauteile bereitgestellt, die in einem Strangpressverfahren hergestellt werden können, also in Pressrichtung eine durchgängig gleiche Querschnittsform aufweisen. Die Seitenwände und der Steg können miteinander verklebt, verschweißt oder verschraubt werden.

Alternativ ist es möglich die Profilschiene mit den beiden Seitenwänden und dem Steg als Ganzes in einem Strangpressverfahren herzustellen. Hierbei verliert man allerdings die Möglichkeit unterschiedlich breite Vertiefungen mit den gleichen Seitenwänden aber unterschiedlich breiten Stegen auszufüllen. Die Stege können folglich entsprechend der quer zur Längsrichtung gemessenen Breite der Vertiefungen ausgewählt werden.

Gemäß einer weiteren Ausführungsform der Erfindung weist der Steg quer zur Längsrichtung verlaufende Gewindebohrungen, die mit quer zur Längsrichtung verlaufenden Durchgangsbohrungen in den Seitenwänden korrespondieren, wobei die Seitenwände durch Schrauben mit dem Steg verbunden sind.

Somit werden nach dem Herstellen der Seitenwände und des Steges in Strangpressverfahren korrespondierende Bohrungen in den Bauteilen angeordnet, um diese miteinander zu verschrauben.

Gemäß einer weiteren Ausführungsform sind der Steg und die Seitenwände miteinander verschweißt oder verklebt.

Verkleben oder Verschweißen bietet die Möglichkeit die Seitenwände mit einem gewünschten Steg, der bezüglich seiner Breite an eine Vertiefung angepasst ist, schnell und kostengünstig zu verbinden.

Gemäß einer weiteren Ausführungsform der Erfindung weist der Steg Durchgangsbohrungen auf, die mit Bohrungen im Boden der Vertiefung oder mit Bohrungen in der Stufe korrespondieren, sodass die Profilschiene in der Vertiefung verschraubt werden kann.

Alternativ oder zusätzlich zum Verschrauben, Einbetonieren oder Einkleben der Seitenwände zur Verbindung der Profilschiene mit dem Grundkörper, kann der Steg demnach mit dem Boden der Vertiefung oder mit dem Steg verbunden werden. Die Bohrungen im Grundkörper werden.

Unabhängig von der Verbindungsart zwischen Seitenwänden und Steg können der Steg und die Seitenwände ineinander eingreifen, um den Halt zwischen den Bauteilen zu verbessern.

Gemäß einer weiteren Ausführungsform der Erfindung ist die Profilschiene in der Vertiefung eingeklebt.

Das Einkleben stellt die einfachste, schnellste und kostengünstigste Verbindungsart zwischen der Profilschiene und dem Grundkörper dar. Als Klebstoffe können insbesondere Harze verwendet werden. Als Verkleben wird im Sinne dieser Erfindung auch das nachträgliche Aufbringen einer weiteren Betonschicht zur Verbindung zwischen Grundkörper und Profilschiene verstanden, wobei diese zusätzliche Betonschicht auf den bereits ausgehärteten Grundkörper aufgebracht wird. Ein weiterer Vorteil des Verklebens ist, dass die Profilschiene nicht durch Schrauben verspannt wird, sodass die T-Nut über die gesamte Länge in Längsrichtung unverändert bleibt.

Alternativ zum Einbetonieren während der Herstellung des Grundkörpers kann die Profilschiene folglich mittels eines Klebstoffes in der Vertiefung festgeklebt werden. Als Kleber eignet sich beispielsweise Epoxidharz. Auch im Falle des Festklebens können Kerben an der Profilschiene angeordnet sein, um die Kontaktfläche zwischen Grundkörper und Profilschiene und somit die adhäsiv wirksame Fläche zu vergrößern.

Vorteilhafterweise weist die Profilschiene eine Form auf, die der Vertiefung entspricht, sodass die Profilschiene formschlüssig in der Vertiefung aufgenommen werden kann. Als Klebstoff zum Einkleben der Profilschiene eignet sich unter anderem Epoxidharz. Um die die Haftung bewirkende Kontaktfläche zwischen Profilschiene und Betonformteil zu vergrößern, kann die Vertiefung eine Stufe aufweisen, die in einer Einbuchtung der Profilschiene aufgenommen wird.

Alternativ zum Einbetonieren oder Einkleben der Profilschiene in die Vertiefung kann diese auch in der Vertiefung eingeschraubt werden.

Gemäß einer weiteren Ausführungsform der Erfindung ist die Profilschiene in der Vertiefung einbetoniert.

Anstelle einer nachträglichen Betonschicht, wie weiter oben beschrieben, wird die Profilschiene demnach mit ihrer Unterseite in den Grundkörper einbetoniert, sodass eine gegenüber Abzugkräften sichere Verbindung entsteht.

Vorteilhaft ist es beim Einbetonieren, wenn die Seitenwände Kerben aufweisen, die in den Beton des Grundkörpers ragen und die Verbindungsfläche zwischen dem Beton des Grundkörpers und den Seitenwänden vergrößern.

Diese als Hinterschnitte gebildeten Kerben steigern somit den festen Sitz der Profilschiene im Grundkörper.

Die Kerbe weist am unteren Teil der Profilschiene eine ähnliche Struktur auf, wie der Vorsprung und der Aufnahmeraum am oberen Teil der Profilschiene. Es besteht daher die Möglichkeit die Profilschiene auch um 180 Grad um ihre Längsachse gedreht in der Vertiefung anzuordnen. Dies hat insbesondere dann Vorteile, wenn man T-Nuten unterschiedlicher Größen mit denselben Seitenwänden herstellen möchte. Somit können kann die Kerbe tiefer oder weniger tief in die Seitenwand ragen als der Aufnahmeraum und/ oder entlang der Hochachse höher oder niedriger als der Aufnahmeraum angeordnet sein. Diese Gestaltung der Seitenwände, bei der mit denselben Seitenwänden unterschiedlich geformte T-Nuten ausbildbar sind, kann von der Anordnung der Profilschienen im Grundkörper unabhängig sein, sodass diese Ausgestaltung nicht auf das Einbetonieren der Profilschiene beschränkt ist.

Demnach wird die Profilschiene bereits bei der Herstellung des Grundkörpers in diesen eingesetzt, sodass die Profilschiene einerseits die Schalform für die Vertiefung bildet, aber andererseits auch gleich in dieser einbetoniert ist. Demnach ist es beispielsweise bei Betonformteilen möglich, die Profilschiene in der Schaltafel so anzuordnen, dass die Profilschiene an der Seitenfläche des Grundkörpers in der Vertiefung angeordnet ist. Um unterschiedliche Höhenlagen der Haltevorrichtungen zu den Seitenflächen des Grundkörpers zu ermöglichen, können die Profilschienen während des Betonierens auf Stufen oder in Senken der Schaltafel angeordnet werden. Im Falle von Stufen wäre die Haltevorrichtung gegenüber der Seitenfläche etwas in den Grundkörper hineinversetzt, im Falle von Senken würde die Haltevorrichtung etwas über die Seitenfläche des Grundkörpers hinausragen.

Durch die Kerbe, die bezüglich der Profilschiene eine Hinterschneidung darstellt, ist es möglich, die Profilschiene stärker und haltesicherer in den Grundkörper einzubetonieren. Werkstücke, die in der Aufspannvorrichtung fixiert werden, üben auf die Profilschiene unter anderem eine Zugkraft in Richtung der Flächennormalen der Seitenfläche aus. Durch die Anordnung einer oder mehrerer Kerben im einbetonierten Teil der Profilschiene, wird die Profilschiene diesen Kräften stärker entgegenwirkend im Grundkörper gesichert.

Die Kerben können mit einbetoniert werden und erhöhen dadurch die Haltekraft der Profilschiene in der Vertiefung des Grundkörpers. Die Kerben verlaufen vorteilhafter Weise über die gesamte Längsrichtung der Profilschiene, können aber auch nur abschnittsweise gebildet sein.

Gemäß einer weiteren Ausführungsform der Erfindung weisen die Seitenflächen Ausschalschrägen auf, wobei die Seitenwände auf ihren den Vorsprüngen abgewandten Flächen mit den Ausschalschrägen korrespondieren, sodass die Ausschalschrägen ausgeglichen werden.

Im Querschnitt weisen die Profilschienen somit auf der dem Vorsprung abgewandten Seite eine Schräge auf. Die Profilschiene ist demnach auf ihrer Oberseite in Querrichtung gemessen breiter als auf ihrer unteren Seite. Um fertigungsbedingte Toleranzen beim Betonieren auszugleichen, kann die Schräge Fläche der Seitenwände nachträglich nachbearbeitet werden.

Gemäß einer weiteren Ausführungsform der Erfindung ragen die Seitenwände über die Seitenfläche des Grundkörpers hinaus.

Die Seitenwände sind somit entlang ihrer Hochachse höher, als die Vertiefung tief ist. Mehrere Profilschienen bilden somit eine über die Seitenfläche hinausragende Ebene, auf der ein Bauteil verspannt werden kann.

Es wird auch eine Profilschiene zur Verwendung in einer Aufspannvorrichtung angegeben, umfassend zwei Seitenwände, die in einem Strangpressverfahrend hergestellt sind.

Die Seitenwände können die weiter oben beschriebenen Merkmale, insbesondere Bohrungen, Kerben, Vertiefungen, Vorsprünge und Ausgleichsschrägen aufweisen. Die Seitenwände sind aus einem Material hergestellt, das sich für Strangpressverfahren eignet, aber gleichzeitig eine stabile T-Nut bildet. Alternativ kann die Profilschiene aus einem Kunststoff oder einem faserverstärkten Kunststoff hergestellt sein.

Die Profilschiene kann ferner einen wie oben beschriebenen Steg umfassen, der aus dem gleichen Material wie die Seitenwände oder aus einem anderen Material hergestellt werden kann. Da der Steg geringeren mechanischen Beanspruchungen ausgesetzt ist als die Seitenwände, kann dieser aus einem weicheren Material hergestellt sein.

Die Profilschiene umfasst demnach zwei Seitenwände und einen Boden, wobei die Profilschiene formschlüssig in die Vertiefung eingebracht werden kann. Die Seitenwände und der Boden der Profilschiene umgeben den Aufnahmeraum, sodass der Aufnahmeraum durch die Seitenwände und den Boden vom Grundkörper getrennt ist.

Demnach wird eine Profilschiene in der Vertiefung angeordnet, sodass die Vertiefung zumindest teilweise mit der Profilschiene gefüllt ist. Die Profilschiene wird üblicherweise aus Stahl oder einem ähnlich festen Werkstoff gefertigt.

Die Profilschiene kann entweder als Ganzes in einem Strangpressverfahren hergestellt werden oder aber aus drei Bauteilen, die jeweils in einem Strangpressverfahren gefertigt werden, von denen zwei Seitenwände mit Haltevorrichtungen bilden und das dritte Teil die beiden Seitenwände stegartig verbindet. Entlang des stegarteigen dritten Teils, dem Steg, können Öffnungen vorgesehen sein mittels derer die Profilschiene beim Gießen eines Betonformteils in einer Schalform gehalten wird. Diese Öffnungen können zugleich vorgesehen sein, um die Profilschiene mit der Stufe oder dem Boden der Vertiefung zu verschrauben.

Die Profilschiene kann so ausgebildet sein, dass sie fertigungsbedingte Unebenheiten der Vertiefung ausgleicht. Insbesondere Ausschalschrägen der Vertiefung können mit der Profilschiene ausgeglichen werden.

Idealer Weise umfasst der Grundkörper mindestens ein Betonformteil. Demnach wird der Grundkörper aus einem oder mehreren Betonformteilen zusammengesetzt. Derartige Betonformteile können in Gussformen hergestellt werden. Die Gussformen können dabei bereits die Negativformen für die späteren Vertiefungen aufweisen, sodass diese bereits beim Guss des Betons hergestellt werden.

Die Betonformteile können zum einfachen Zusammensetzen des Grundkörpers Nuten und Federn oder Anlageflansche umfassen, entlang derer die einzelnen Betonformteile zusammengesetzt werden können. Das Zusammensetzten der Betonformteile zu einem Grundkörper kann beispielsweise mittels Verschrauben, Verkleben oder aber durch Einbringen einer dünnen Betonschicht zwischen die Betonformteile erfolgen.

Besonders hinsichtlich der Absorption von Vibrationen erweist sich die Verwendung einzelner Betonformteile als besonders vorteilhaft. So hat es sich herausgestellt, dass einzelne Betonformteile, die freitragend miteinander verbunden werden, Vibrationen noch stärker dämpfen als durchgehende Betonteile.

Der Grundkörper kann insbesondere Quaderförmig ausgebildet sein.

Ein quaderförmiger Grundkörper kann entweder aus einem einzigen Betonguss oder aus mehreren Betonformteilen zusammengesetzt sein. Ein quaderförmiger Grundkörper mit vier Seitenflächen, einer Deckfläche und einer Standfläche könnte beispielsweise auf den vier Seitenflächen und der Deckfläche mit T-Nuten, die mittels Profilschienen gebildet werden, versehen seien. Vorteilhafterweise sind die T-Nuten auf unterschiedlichen Seitenflächen und/oder der Deckfläche mit verschiedenartigen T-Nuten versehen. Insbesondere hinsichtlich des Abstandes einzelner T-Nuten untereinander, der Breite der T-Nuten oder der Materialstärke der Haltevorrichtung der T-Nuten können sich diese unterscheiden.

Die Verwendung von fünf Betonformteilen, wovon vier die Seitenflächen bilden und eines eine Deckfläche bildet, hat zudem den Vorteil, dass sich diese Betonformteile aus einer Schalform bequem herauslösen lassen. Idealerweise ist die Befestigungsvorrichtung im Falle einer Quaderform auf der Bodenfläche des Quaders angeordnet, sodass der quaderförmige Grundkörper sicher auf einem Maschinentisch oder allgemein im Bearbeitungsbereich einer Maschine angeordnet und fixiert werden kann.

Vorteilhaft ist es, wenn die Befestigungsvorrichtung integral in einer Seitenfläche des Grundkörpers angeordnet. Demnach wird die Befestigungsvorrichtung auf mindestens einer Seitenfläche des Grundkörpers in den Beton integriert. Eine solche Integration erfolgt durch Eingießen der Befestigungsvorrichtung in den Beton. Angriffsflächen für Spanneisen können beispielweise als stirnseitige Aussparungen ausgeführt werden, die beispielsweise auf zwei gegenüberliegenden Seitenflächen des Grundkörpers vorgesehen werden.

Alternativ oder zusätzlich zu den T-Nuten kann demnach auf wenigstens einer Seitenfläche des Grundkörpers eine Befestigungsvorrichtung geschaffen werden. Die Befestigungsvorrichtung kann dabei als im Beton geschaffene Aussparung, in die Spanneisen eingreifen können, oder einfach als Bohrung gebildet sein, durch die Schrauben geführt werden können.

Gemäß einer weiteren Ausführungsform der Erfindung ist die Befestigungsvorrichtung als Platte mit Bohrungen und Angriffsflächen zum Durchführen und Anlegen von Haltemitteln ausgebildet, die einen Flansch auf einer Seitenfläche des Grundkörpers bildet.

Eine derartige Platte wird üblicherweise auf der Grundseite des Grundkörpers, also auf der Standfläche des Grundkörpers, angeordnet, sodass der Grundkörper über die Grundplatte auf einem Untergrund gesichert werden kann. Da die Grundplatte idealerweise etwas über die Grundfläche des Grundkörpers hinausragt, wird ein Flansch ausgebildet, entlang welchem der Grundkörper auf dem Untergrund gesichert werden kann. Auf dem Flansch sind Schraubendurchführungen wie beispielweise Langlochbohrungen oder einfache Bohrungen sowie Angriffsflächen, auf denen ein Spanneisen angesetzt werden kann, vorgesehen.

Der Grundkörper kann innen hohl ausgebildet sein. Die hohle Ausführung hat den Vorteil, dass Material und Masse eingespart werden, ohne dabei die statische Belastung zu stark zu reduzieren. Aus statischen Gesichtspunkten wird der Grundkörper vorteilhafter Weise so ausgeführt, dass der innere Hohlraum zylinderförmig ist. Die zylinderförmige Ausführung, bei der auf der Innenseite einzelner Betonformkörper Bögen geschaffen werden, bietet besondere statische Vorteile bei Kräften, die entlang der Flächennormalen von Seitenflächen wirken.

Im Falle einer als Grundplatte ausgebildeten Befestigungsvorrichtung kann diese in ihrer Mitte ebenfalls kreisförmig ausgespart werden.

Die Vertiefung weist fertigungsbedingt üblicher Weise stumpfwinklige Ausschalungsschrägen auf. Beim Ausschalen von beispielsweise Betonformteilen erweisen sich Fortsätze oder Einbuchtungen, die zu ihrer Grundfläche einen rechten oder gar spitzen Winkel bilden, als besonders nachteilhaft, weil diese das Ausschalen erschweren. Ein stumpfer Winkel zwischen Einbuchtungen oder Fortsätzen sorgt daher für ein bequemes und einfaches Ausschalen von Betonformteilen aus der Schalform.

Der Beton des Grundkörpers ist vorteilhafter weise ein ultrahochfester Beton. Alternativ kann der Beton des Grundkörpers auch armiert oder faserverstärkt oder ein hochfester Beton oder ein Hochleistungsbeton sein.

Ultrahochfeste Betone werden üblicher Weise nicht armiert, sodass auch die Übertragung von Schwingungen über die Armierungseisen vermieden wird, was abermals zur Reduzierung der auf das zu bearbeitende Werkstück übertragenen Vibrationen dient.

Die Erfindung wird nachfolgend unter Bezugnahme auf die Zeichnung näher erläutert. Es zeigen:
- Fig. 1: eine erste Ausführungsform der Seitenwand,
- Fig. 2: eine zweite Ausführungsform der Seitenwand,
- Fig. 3: einen Steg,
- Fig. 4: eine aus zwei Seitenwänden und einem Steg gebildete Profilschiene in einer ersten Ausführungsform,
- Fig. 5: eine aus zwei Seitenwänden und einem Steg gebildete Profilschiene in einer zweiten Ausführungsform,
- Fig. 6: eine dritte Ausführungsform der Seitenwand,
- Fig. 7: eine Profilschiene in einer weiteren Ausführungsform in einer perspektivischen Ansicht,
- Fig. 8: eine Profilschiene in einer weiteren Ausführungsform in einer perspektivischen Ansicht,
- Fig. 9A: einen Grundkörper in einer geschnittenen Darstellung,
- Fig. 9B: eine Aufspannvorrichtung in einer geschnittenen Darstellung,
- Fig. 9C: einen Grundkörper in einer weiteren Ausführungsform in einer perspektivischen Darstellung,
- Fig. 10: die Anordnung mehrerer Profilschienen in einer Schaltafel vor dem Betonieren,
- Fig. 11: eine Detaildarstellung des Grundkörpers aus Figur 9C,
- Fig. 12: eine Detaildarstellung einer Profilschiene in einer Aufspannvorrichtung in einer ersten Ausführungsform, und
- Fig. 13: eine Detaildarstellung einer Profilschiene in einer Aufspannvorrichtung in einer zweiten Ausführungsform.

In den Figuren sind gleiche oder funktional gleich wirkende Elemente mit den gleichen Bezugszeichen versehen.

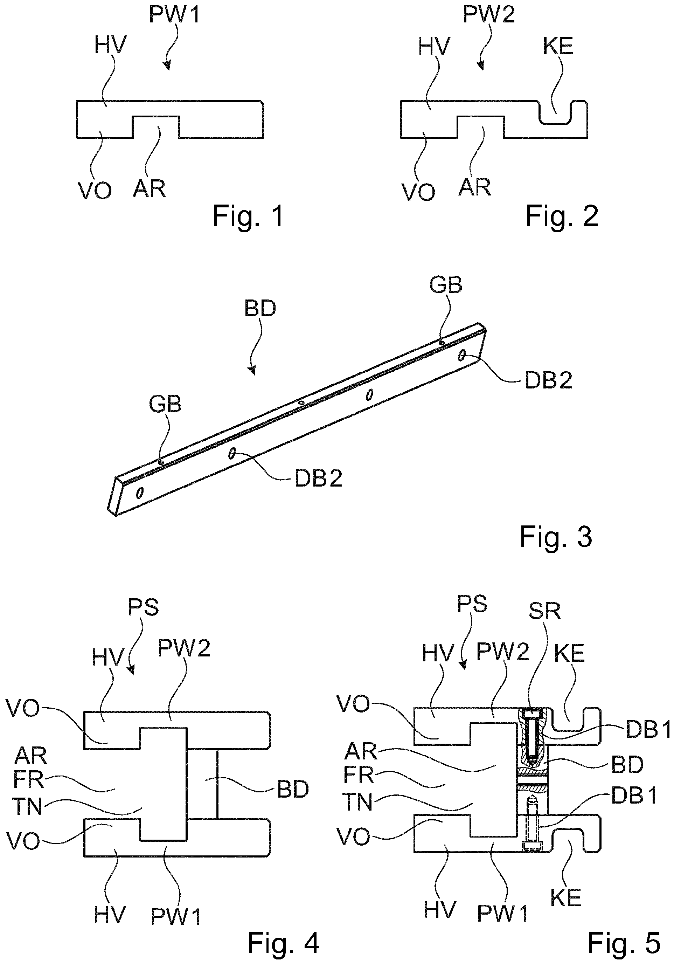

In Fig. 1 wird eine erste Seitenwand PW1 in einer Seitenansicht dargestellt. Die Seitenwand PW1 umfasst einen Vorsprung VO und einen Aufnahmeraum AR. Der Vorsprung VO ist auf einer als Oberseite bezeichneten Seite der Seitenwand angeordnet. Mit seiner der Oberseite gegenüberliegenden Unterseite kann die Seitenwand zur Ausbildung einer Profilschiene in einer Aufspannvorrichtung angeordnet werden. Die Seitenwand weist einen Querschnitt auf, der die Herstellung mittels eines Strangpressverfahrens erlaubt.

In Fig. 2 wird eine Ausführungsform der Seitenwand PW1 aus Fig. 1 gezeigt, die eine Kerbe KE umfasst, die auf der dem Aufnahmeraum gegenüberliegenden Rückseite der Seitenwand angeordnet ist. Die Kerbe bildet einen Hinterschnitt und kann in einen Grundkörper einbetoniert werden. Die Kerbe kann aber auch als alternativer Aufnahmeraum verwendet werden. Dazu würde die Seitenwand derart in einer Vertiefung eines Grundkörpers angeordnet, dass der Aufnahmeraum zur Seitenfläche der Vertiefung weist und die Kerbe in die Vertiefung weist. Die Form einer T-Nut, die zwischen zwei gegenüberliegenden Seitenwänden einer Profilschiene entsteht, könnte demnach variiert werden.

In Fig. 3 wird ein Steg BD dargestellt, mit dem Seitenwände wie in Fig. 1 oder 2 gezeigt verbunden werden können. Der Steg BD umfasst in der dargestellten Ausführungsform Durchgangsbohrungen DB2, mit denen der Steg und somit eine Profilschiene in einer Vertiefung verschraubt werden kann. Weiter weist der Steg BD Gewindebohrungen GB auf, mit denen die Seitenwände PW1, PW2 mit dem Steg BD verschraubt werden können. Der Steg kann in einem Strangpressverfahren hergestellt werden.

In den Fig. 4 und 5 werden Profilschienen dargestellt, die jeweils eine erste Seitenwand PW1 und eine zweite Seitenwand PW2 aufweisen, wobei die Seitenwände mit einem Steg BD verbunden sind. In Fig. 4 wurden die Seitenwände PW1, PW2 und der Steg BD verklebt oder verschweißt. in Fig. 5 wurden die Seitenwände PW1, PW2 und der Steg BD miteinander mittels Schrauben SR verbunden. Die Seitenwände PW1, PW2 umfassen zu diesem Zweck Durchgangsbohrungen DB1, durch die die Schraube SR in die Gewindebohrungen GB des Steges BD eingreift.

Die in den Fig. 4 und 5 dargestellten einander gegenüberliegenden Seitenwände PW1, PW2 zeigen mit ihren Vorsprüngen VO und Aufnahmeräumen zueinander, sodass aus dem Freiraum FR zwischen den Vorsprüngen VO und den Aufnahmeräumen eine T-Nut TN gebildet wird.

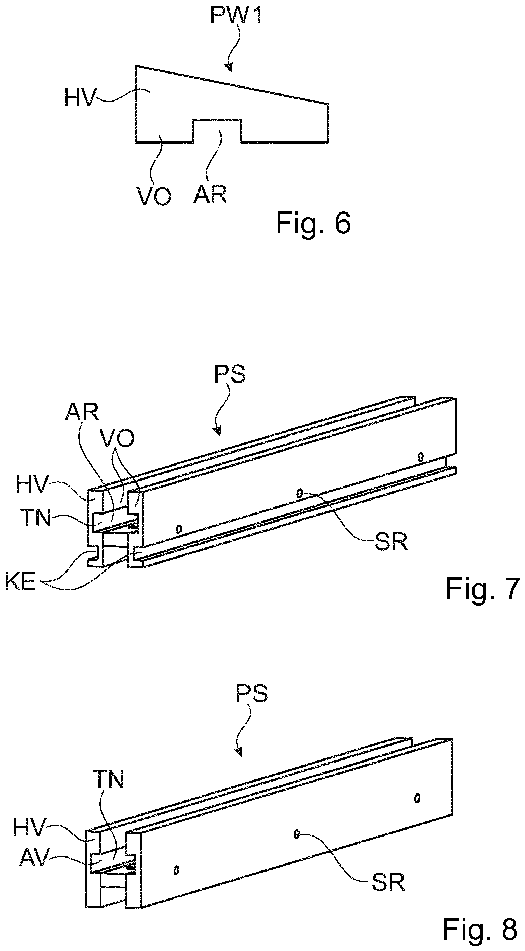

In Fig. 6 ist eine weitere Ausführungsform der Seitenwand gezeigt, bei der die Rückseite eine Ausschalschräge AS aufweist. Mittels dieser Ausschalschräge AS in der Seitenwand PW1 können fertigungsbedingte Ausschalschrägen im Vorsprung des Grundkörpers ausgeglichen werden, sodass die Vorderseiten, zwischen denen die T-Nut gebildet wird, parallel zueinander stehen.

In Fig. 7 ist eine perspektivische Ansicht einer Profilschiene PS gezeigt, bei der die Seitenwände mittels Schrauben SR mit dem Steg BD verbunden wurden. Auch bei Fig. 8 wurden die Bauteile der Profilschiene PS mittels Schrauben verbunden, allerdings weisen die Seitenwände keine Kerben auf.

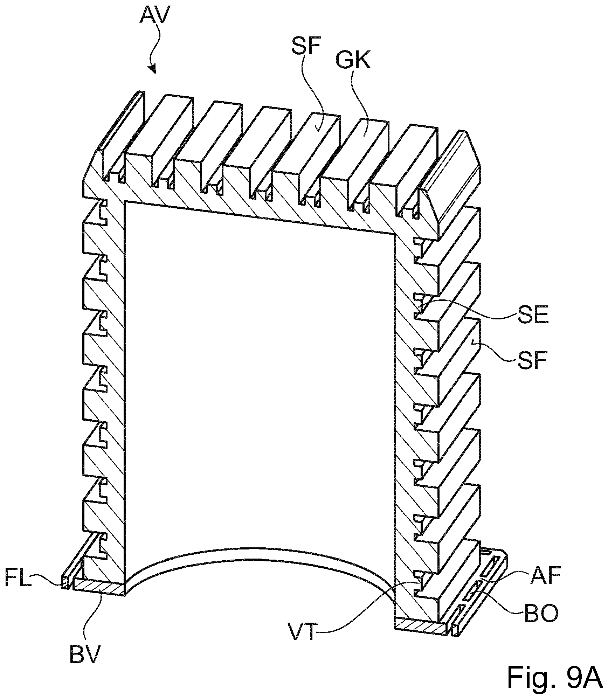

In Fig. 9A wird ein Grundkörper GK mit Vertiefungen VT und in den Vertiefungen VT angeordneten Stufen SE dargestellt. Die Stufen SE ragen über den Boden BO in der Vertiefung hinaus. Auf der Unterseite des Grundkörpers GK ist eine Befestigungsvorrichtung BV angeordnet. Mit der Befestigungsvorrichtung BV kann die Aufspannvorrichtung AV auf einer Grundplatte fixiert werden. Der Grundkörper GK aus Fig. 9A ist derart ausgebildet, dass Seitenwände in den Vertiefungen angeordnet werden können, um Profilschienen zu bilden. Seitenwände der Profilschienen werden dabei mit ihren Unterseiten in den Räumen zwischen der Seitenfläche der Vertiefung, dem Boden BO und der Stufe SE mit dem Grundkörper verklebt. Die Ausrichtung der Seitenwände erfolgt dabei so, dass die Vorsprünge VO der Seitenwände zueinander weisen, um T-Nuten auszubilden.

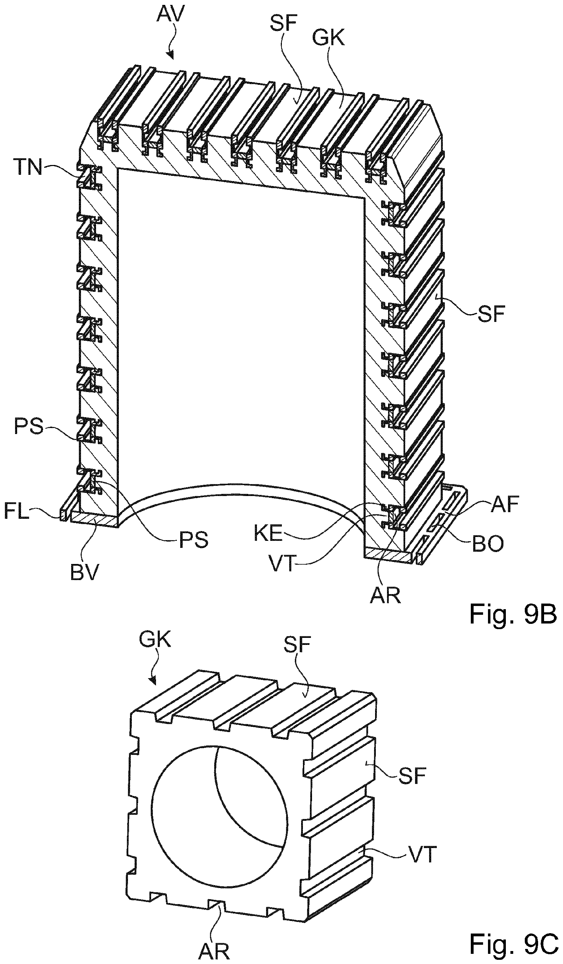

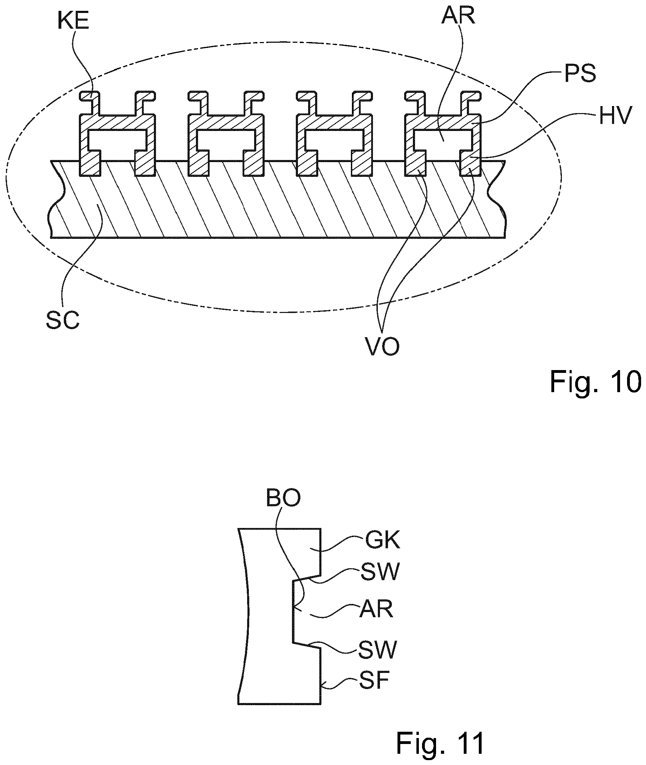

Alternativ zum Einkleben, können die Seitenwände auch in den Grundkörper einbetoniert werden. Diese Ausführungsform ist in Fig. 9B dargestellt. Die Profilschienen PS ragen dabei mit den Kerben KE ihrer Seitenwände PW1, PW2 in den Grundkörper GK. Bei der Herstellung werden die Profilschienen PS wie in Fig. 10 dargestellt auf einer Schaltafel SC angeordnet, wobei die als Haltevorrichtung bezeichneten Oberseiten der Seitenwände PW1, PW2 teilweise in die Schaltafel SC ragen, sodass diese später über die Außenfläche SF des Grundkörpers GK hinausragen.

In Fig. 9C wird eine weitere Ausführungsform eines aus Beton hergestellten Grundkörpers (GK) gezeigt, bei dem die Vertiefungen VT einen sich in den Grundkörper hinein verjüngenden trapezförmigen Querschnitt aufweisen. Die Vertiefungen sind demnach mit Ausschalschrägen versehen, die das Betonieren vereinfachen. Diese Schrägen können mit den Ausschalschrägen AS an den Seitenwänden PW1, PW2 wie in Fig. 6 gezeigt ausgeglichen werden. Fig. 11 zeigt einen Detailausschnitt einer Vertiefung aus Fig. 9C. Der Winkel zwischen dem Boden BO und den mit Ausschalschrägen AS versehenen Seitenflächen ist flacher als 90°.

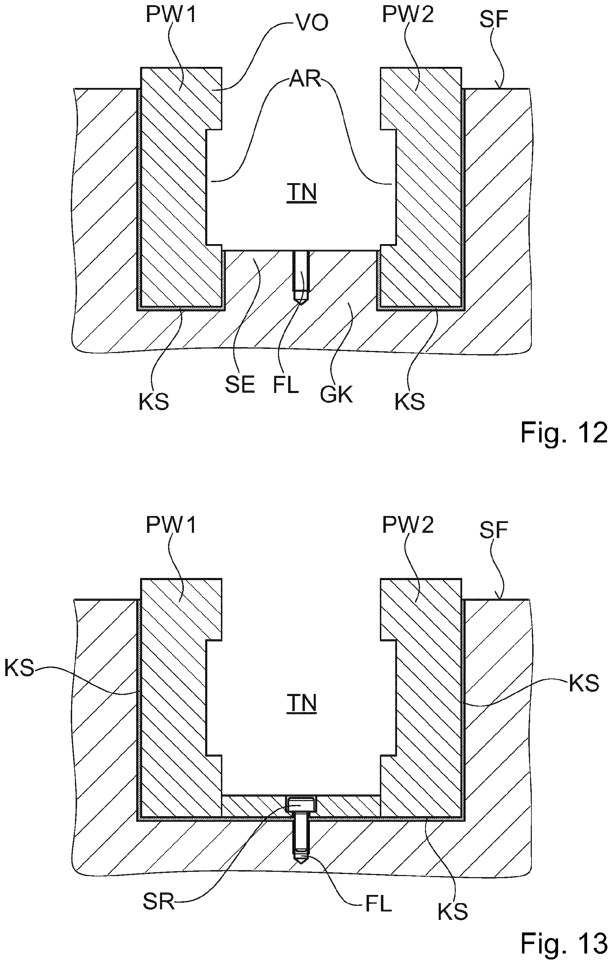

In Fig. 12 wird eine Ausführungsform der Aufspannvorrichtung in einer Ausführungsform gezeigt, bei der die Seitenwände PW1 und PW2 einander gegenüberliegend in der Vertiefung VT im Grundkörper GK angeordnet sind. Die Seitenwände sind dabei mit einem Klebstoff KS in der Vertiefung verklebt. Die mittels den Seitenwänden PW1 und PW2 gebildete Profilschiene PS ragt über die Außenfläche des Grundkörpers hinaus. In der Stufe SE auf dem Boden BO der Vertiefung ist eine Bohrung angeordnet, in der ein Steg, der zwischen den beiden Seitenwänden angeordnet werden könnte, verschraubt werden könnte.

In Fig. 13 ist eine Ausführungsform der Aufspannvorrichtung AV dargestellt, bei der die beiden Seitenwände PW1 und PW2 mittels eines Steges BD verbunden sind, sodass eine Profilschiene PS mit diesen Bauteilen entsteht. Die Profilschiene PS wurde anschließend mittels eines Klebstoffes KS in der Vertiefung VT im Grundkörper GK festgeklebt und zusätzlich mittels Schrauben SR, die den Steg BD in Durchgangsbohrungen DB2 durchdringen und in Bohrungen FL im Boden BO eingreifen verschraubt.

## Patentansprüche

1. Aufspannvorrichtung (AV) zum Fixieren von Werkstücken bei einer Bearbeitung, umfassend eine Profilschiene (PS) und einen Grundkörper aus Beton (GK), wobei die Profilschiene (PS) in einer Vertiefung (VT) des Grundkörpers (GK) angeordnet ist, und die Vertiefung (VT) entlang einer Längsrichtung zwischen gegenüberliegenden Stirnseiten einer Außenfläche (SF) des Grundkörpers (GK) ausgebildet ist, wobei die Profilschiene (PS) eine erste Seitenwand (PW1) und eine zweite Seitenwand (PW2) umfasst und die Seitenwände (PW1, PW2) innerhalb der Vertiefung (VT) einander gegenüberliegend und mit Seitenflächen (SW) der Vertiefung (VT) in Kontakt stehend angeordnet sind, derart, dass zwischen einander gegenüberliegenden Vorsprüngen (VO) der Seitenwände (PW1, PW2) ein Freiraum (FR) ausgebildet wird, der mit einander gegenüberliegenden Aufnahmeräumen (AR) der Seitenwände (PW1, PW2) zusammenwirkt, um eine T-Nut (TN) zwischen den Seitenwänden (PW1, PW2) in der Vertiefung (VT) auszubilden,
**dadurch gekennzeichnet, dass**
die erste Seitenwand (PW1) und die zweite Seitenwand (PW2) separate Baugruppen sind.

2. Aufspannvorrichtung nach Anspruch 1 umfassend eine Stufe (SE), die entlang der Längsrichtung verlaufend aus einem Boden (BO) der Vertiefung (VT) herausstehend ausgebildet ist, wobei die Seitenwände (PW1, PW2) die zwischen den Seitenflächen (SW), dem Boden (BO) und der Stufe (SE) gebildeten Räume ausfüllen.

3. Aufspannvorrichtung nach Anspruch 1 oder 2, bei der die Profilschiene (PS) einen Steg (BD) umfasst, der die beiden gegenüberliegenden Seitenwände (PW1, PW2) verbindet, wobei die Seitenwände (PW1, PW2) und der Steg (BD) separate Baugruppen bilden, die miteinander verbindbar sind.

4. Aufspannvorrichtung nach Anspruch 3, bei der der Steg (BD) quer zur Längsrichtung verlaufende Gewindebohrungen (GB) aufweist, die mit quer zur Längsrichtung verlaufenden Durchgangsbohrungen (DB1) in den Seitenwänden (PW1, PW2) korrespondieren, wobei die Seitenwände (PW1, PW2) durch Schrauben (SR) mit dem Steg (BD) verbunden sind.

5. Aufspannvorrichtung nach Anspruch 3, bei der der Steg (BD) und die Seitenwände (PW1, PW2) miteinander verschweißt oder verklebt sind.

6. Aufspannvorrichtung nach einem der Ansprüche 3 bis 5, bei der der Steg (BD) Durchgangsbohrungen (DB2) aufweist, die mit Bohrungen (FL) im Boden (BO) der Vertiefung (VT) oder mit Bohrungen (FL) in der Stufe (SE) korrespondieren, sodass die Profilschiene (PS) in der Vertiefung (VT) verschraubt werden kann.

7. Aufspannvorrichtung nach einem der Ansprüche 1 bis 6, bei der die Profilschiene (PS) in der Vertiefung (VT) eingeklebt ist.

8. Aufspannvorrichtung nach einem der Ansprüche 1 bis 6, bei der die Profilschiene (PS) in der Vertiefung (VT) einbetoniert ist.

9. Aufspannvorrichtung nach Anspruch 8, bei der die Seitenwände (PW1, PW2) Kerben (KE) aufweisen, die in den Beton des Grundkörpers (GK) ragen und die Verbindungsfläche zwischen dem Beton des Grundkörpers (GK) und den Seitenwänden (PW1, PW2) vergrößern.

10. Aufspannvorrichtung nach einem der Ansprüche 1 bis 9, bei der die Seitenflächen (SW) Ausschalschrägen (AS) aufweisen, wobei die Seitenwände (PW1, PW2) auf ihren den Vorsprüngen (VO) abgewandten Flächen mit den Ausschalschrägen (AS) korrespondieren, sodass die Ausschalschrägen ausgeglichen werden.

11. Aufspannvorrichtung nach einem der Ansprüche 1 bis 10, bei der die Seitenwände (PW1, PW2) über die Seitenfläche des Grundkörpers hinausragen.

12. Aufspannvorrichtung nach einem der Ansprüche 1 bis 11, wobei die erste und zweite Seitenwand (PW1, PW2) in einem Strangpressverfahrend hergestellt sind.

13. Aufspannvorrichtung nach Anspruch 12, wobei die Seitenwände (PW1, PW2) Kerben aufweisen, mittels denen die Profilschiene (PS) in einen Grundkörper aus Beton einbetoniert werden kann.

14. Aufspannvorrichtung nach Anspruch 12 oder 13 umfassend einen Steg (BD), der in einem Strangpressverfahren hergestellt ist und durch verschrauben, verkleben oder verschweißen mit den Seitenwänden verbunden ist.

15. Aufspannvorrichtung nach einem der Ansprüche 12 bis 14, die aus einem Metall oder Metallgemisch gefertigt ist.

## Claims

1. A clamping device (AV) for fixing workpieces during machining, comprising a profile rail (PS) and a main body (GK) made of concrete, the profile rail (PS) being arranged in a depression (VT) of the main body (GK), and the depression (VT) being formed along a longitudinal direction between opposite end faces of an outer surface (SF) of the main body (GK), the profile rail (PS) comprising a first side wall (PW1) and a second side wall (PW2), and the side walls (PW1, PW2) being arranged opposite one another within the depression (VT) and in contact with side surfaces (SW) of the depression (VT) in such a way that a free space (FR) is formed between opposing projections (VO) of the side walls (PW1, PW2), which free space interacts with opposing receiving spaces (AR) of the side walls (PW1, PW2) in order to form a T-groove (TN) between the side walls (PW1, PW2) in the depression (VT),
**characterized in that**
the first side wall (PW1) and the second side wall (PW2) are separate assemblies.

2. The clamping device according to claim 1, comprising a step (SE) which extends along the longitudinal direction and projects out of a base (BO) of the depression (VT), the side walls (PW1, PW2) filling the spaces formed between the side surfaces (SW), the base (BO) and the step (SE).

3. The clamping device according to either claim 1 or claim 2, wherein the profile rail (PS) comprises a web (BD) which connects the two opposing side walls (PW1, PW2), the side walls (PW1, PW2) and the web (BD) forming separate assemblies which can be connected to one another.

4. The clamping device according to claim 3, wherein the web (BD) has threaded bores (GB) extending transversely to the longitudinal direction, which threaded bores correspond to through-bores (DB1) in the side walls (PW1, PW2) that extend transversely to the longitudinal direction, the side walls (PW1, PW2) being connected to the web (BD) by screws (SR).

5. The clamping device according to claim 3, wherein the web (BD) and the side walls (PW1, PW2) are welded or glued together.

6. The clamping device according to any of claims 3 to 5, wherein the web (BD) has through-bores (DB2) which correspond to bores (FL) in the base (BO) of the depression (VT) or to bores (FL) in the step (SE), so that the profile rail (PS) can be screwed in the depression (VT).

7. The clamping device according to any of claims 1 to 6, wherein the profile rail (PS) is glued in the depression (VT).

8. The clamping device according to any of claims 1 to 6, wherein the profile rail (PS) is concreted in the depression (VT).

9. The clamping device according to claim 8, wherein the side walls (PW1, PW2) have notches (KE) which project into the concrete of the main body (GK) and increase the connection surface between the concrete of the main body (GK) and the side walls (PW1, PW2).

10. The clamping device according to any of claims 1 to 9, wherein the side surfaces (SW) have disengagement bevels (AS), the side walls (PW1, PW2) corresponding, on their surfaces facing away from the projections (VO), to the disengagement bevels (AS) so that the disengagement bevels are compensated for.

11. The clamping device according to any of claims 1 to 10, wherein the side walls (PW1, PW2) project beyond the side surface of the main body.

12. The clamping device according to any of claims 1 to 11, wherein the first and the second side wall (PW1, PW2) are produced in an extrusion process.

13. The clamping device according to claim 12, wherein the side walls (PW1, PW2) have notches by means of which the profile rail (PS) can be concreted into a main body made of concrete.

14. The clamping device according to either claim 12 or claim 13, comprising a web (BD) which is produced in an extrusion process and is connected to the side walls by screwing, gluing or welding.

15. The clamping device according to any of claims 12 to 14, which is made of a metal or metal mixture.

## Revendications

1. Dispositif de serrage (AV) permettant de fixer des pièces lors d'un usinage, comprenant un rail profilé (PS) et un corps de base (GK) en béton, dans lequel le rail profilé (PS) est disposé dans une cavité (VT) du corps de base (GK), et la cavité (VT) est réalisée le long d'une direction longitudinale entre des faces frontales opposées d'une surface extérieure (SF) du corps de base (GK), dans lequel le rail profilé (PS) comprend une première paroi latérale (PW1) et une seconde paroi latérale (PW2) et les parois latérales (PW1, PW2) sont disposées à l'intérieur de la cavité (VT) opposées l'une à l'autre et en contact avec des surfaces latérales (SW) de la cavité (VT), de telle sorte qu'un espace libre (FR) est réalisé entre des saillies (VO) opposées les unes aux autres des parois latérales (PW1, PW2), lequel espace libre coopère avec des espaces de réception (AR) opposés l'un à l'autre des parois latérales (PW1, PW2) pour réaliser une rainure en T (TN) entre les parois latérales (PW1, PW2) dans la cavité (VT),
**caractérisé en ce que**
la première paroi latérale (PW1) et la seconde paroi latérale (PW2) sont des modules séparés.

2. Dispositif de serrage selon la revendication 1, comprenant un gradin (SE) qui s'étend le long de la direction longitudinale et fait saillie depuis un fond (BO) de la cavité (VT), dans lequel les parois latérales (PW1, PW2) remplissent les espaces formés entre les surfaces latérales (SW), le fond (BO) et le gradin (SE).

3. Dispositif de serrage selon la revendication 1 ou 2, dans lequel le rail profilé (PS) comprend une nervure (BD) qui relie les deux parois latérales (PW1, PW2) opposées, dans lequel les parois latérales (PW1, PW2) et la nervure (BD) forment des modules séparés qui peuvent être reliés entre eux.

4. Dispositif de serrage selon la revendication 3, dans lequel la nervure (BD) présente des trous taraudés (GB) qui s'étendent transversalement à la direction longitudinale et correspondent à des trous traversants (DB1) s'étendant transversalement à la direction longitudinale dans les parois latérales (PW1, PW2), dans lequel les parois latérales (PW1, PW2) sont reliées à la nervure (BD) par des vis (SR).

5. Dispositif de serrage selon la revendication 3, dans lequel la nervure (BD) et les parois latérales (PW1, PW2) sont soudées ou collées les unes aux autres.

6. Dispositif de serrage selon l'une des revendications 3 à 5, dans lequel la nervure (BD) présente des trous traversants (DB2) qui correspondent à des trous (FL) dans le fond (BO) de la cavité (VT) ou à des trous (FL) dans le gradin (SE), de sorte que le rail profilé (PS) peut être vissé dans la cavité (VT).

7. Dispositif de serrage selon l'une des revendications 1 à 6, dans lequel le rail profilé (PS) est collé dans la cavité (VT).

8. Dispositif de serrage selon l'une des revendications 1 à 6, dans lequel le rail profilé (PS) est bétonné dans la cavité (VT).

9. Dispositif de serrage selon la revendication 8, dans lequel les parois latérales (PW1, PW2) présentent des encoches (KE) qui font saillie dans le béton du corps de base (GK) et augmentent la surface de liaison entre le béton du corps de base (GK) et les parois latérales (PW1, PW2).

10. Dispositif de serrage selon l'une des revendications 1 à 9, dans lequel les surfaces latérales (SW) présentent des chanfreins de coffrage (AS), dans lequel les parois latérales (PW1, PW2) correspondent aux chanfreins de coffrage (AS) sur leurs surfaces opposées aux saillies (VO), de sorte que les chanfreins de coffrage sont équilibrés.

11. Dispositif de serrage selon l'une des revendications 1 à 10, dans lequel les parois latérales (PW1, PW2) font saillie au-delà de la surface latérale du corps de base.

12. Dispositif de serrage selon l'une des revendications 1 à 11, dans lequel les première et seconde parois latérales (PW1, PW2) sont produites lors d'un procédé d'extrusion.

13. Dispositif de serrage selon la revendication 12, dans lequel les parois latérales (PW1, PW2) présentent des encoches au moyen desquelles le rail profilé (PS) peut être bétonné dans un corps de base en béton.

14. Dispositif de serrage selon la revendication 12 ou 13, comprenant une nervure (BD) qui est produite lors d'un procédé d'extrusion et est reliée aux parois latérales par vissage, collage ou soudage.

15. Dispositif de serrage selon l'une des revendications 12 à 14, lequel est fabriqué à partir d'un métal ou d'un mélange de métaux.
